# EUROPEAN PATENT APPLICATION

(11) **EP 4 524 790 A1**
(43) Date of publication of application: **19.03.2025**
(21) Application number: 22949274.9
(22) Date of filing: 27.06.2022
(51) Int. Cl.: G06F 21/56

(54) **ABNORMALITY DETECTION DEVICE, ABNORMALITY DETECTION METHOD, AND ABNORMALITY DETECTION PROGRAM**

(71) Applicant: NIPPON TELEGRAPH AND TELEPHONE CORPORATION, Chiyoda-ku, Tokyo 100-8116 (JP)
(72) Inventor: FUJIKI, Naoto, Musashino-shi, Tokyo 180-8585 (JP); NAGAI, Tomohiro, Musashino-shi, Tokyo 180-8585 (JP)
(74) Representative: Hoffmann Eitle
(86) International application number: PCT/JP2022/025615
(87) International publication number: WO 2024/003995

(57) **Abstract**

A creation unit (15b) creates a group for each of predetermined communication features for alerts indicating that communication has been detected as abnormal communication that is different in pattern from normal communication. An identification unit (15c) identifies, for each of the created groups of alerts, a cause of notification of the alerts.

## Description

### Technical Field

The present invention relates to an abnormality detection device, an abnormality detection method, and an abnormality detection program.

### Background Art

An abnormality detection technology for detecting a known threat has conventionally been known. For example, there is known a technique for grouping alerts by pattern matching against known threats (see Non Patent Literature 1). In addition, there is known a technique for visualizing network intrusion monitoring by inputting a transmission source IP address, a reception destination IP address, an occurrence time, a positive integer ID indicating a fraud type, and a level on a five-level scale indicating the degree of risk (see Non Patent Literature 2). In addition, there is known a technique for reducing false detections focusing on an amount of occurrence of security alerts for each signature in intrusion detection, using a transmission source IP address, an occurrence time, and a signature as inputs (see Non Patent Literature 3).

### Citation List

### Non Patent Literature

Non Patent Literature 1: "Nozomi Networks Gurdian", [online], NOZOMI NETWORKS, [retrieved on May 27, 2022], the Internet <URL:https://www.nozominetworks.com/products/guardian/>
Non Patent Literature 2: Itoh, Takakura, and two others, "A Visualization Technique for Monitoring of Network Intrusion Detection Data", [online], Kyoto University, [retrieved on May 27, 2022], the Internet <URL:http://itolab.is.ocha.ac.jp/~itot/paper/ItotRDCPJ12.pdf>
Non Patent Literature 3: Iwasaki, Kakuta, and four others, "Fusei shinnyu kenchi ni okeru security alerts no signature betsu hasseiryo ni chakumoku shita gokenchi sakugen shuhou (in Japanese) (Technique for Reducing False Detections Focusing on Amount of Occurrence of Security Alerts for each Signature in Intrusion Detection)", [online], October 2018, Computer Security Symposium 2018, [retrieved on May 27, 2022], the Internet <URL:https://ipsj.ixsq.nii.ac.jp/ej/?action=repository_uri&item_id =192157&file_id=1&file_no=1>

### Summary of Invention

### Technical Problem

However, according to the conventional technologies, there is a risk of overlooking a true alert in an anomaly-type abnormality detection system. That is, the conventional technologies, which depend on pre-defined attack conditions and attack results, cannot be applied to an anomaly-type abnormality detection system that detects an unknown threat by detecting abnormal communication that does not fit a normal communication pattern.

In addition, even in an anomaly-type abnormality detection system, in a case where learning data is insufficient or in a case where the normal communication pattern has changed, the number of over-detections increases, a large number of alerts to be checked during monitoring occur, and there is a risk of overlooking a true alert.

The present invention has been made in view of the above, and an object thereof is to make it possible to avoid a risk of overlooking a true alert in an anomaly-type abnormality detection system.

### Solution to Problem

In order to solve the above-described problems and achieve the object, an abnormality detection device according to the present invention includes: a creation unit that creates a group for each of predetermined communication features for alerts indicating that communication has been detected as abnormal communication that is different in pattern from normal communication; and an identification unit that identifies, for each of the created groups of alerts, a cause of notification of the alerts.

### Advantageous Effects of Invention

According to the present invention, it is possible to avoid a risk of overlooking a true alert in an anomaly-type abnormality detection system.

### Brief Description of Drawings

Fig. 1 is a schematic diagram illustrating a schematic configuration of an abnormality detection device according to the present embodiment.
Fig. 2 is a diagram for illustrating processing of a creation unit and an identification unit.
Fig. 3 is a diagram for illustrating the processing of the identification unit.
Fig. 4 is a diagram for illustrating the processing of the identification unit.
Fig. 5 is a diagram for illustrating the processing of the identification unit.
Fig. 6 is a diagram for illustrating the processing of the identification unit.
Fig. 7 is a diagram for illustrating the processing of the identification unit.
Fig. 8 is a diagram illustrating an example of abnormality detection processing results displayed on a screen.
Fig. 9 is a flowchart illustrating an abnormality detection processing procedure.
Fig. 10 is a diagram illustrating an example of a computer that executes an abnormality detection program.

### Description of Embodiments

Hereinafter, an embodiment of the present invention will be described in detail with reference to the drawings. Note that the present invention is not limited by this embodiment. Furthermore, in the description of the drawings, the same portions are denoted by the same reference numerals.

### [Configuration of Abnormality Detection Device]

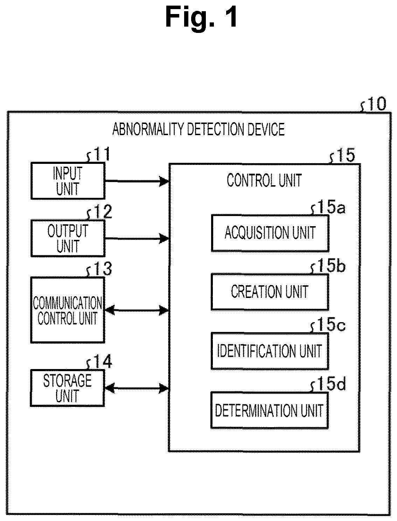

Fig. 1 is a schematic diagram illustrating a schematic configuration of an abnormality detection device according to the present embodiment. As exemplified in Fig. 1, an abnormality detection device 10 of the present embodiment is implemented with a general-purpose computer such as a personal computer, and includes an input unit 11, an output unit 12, a communication control unit 13, a storage unit 14, and a control unit 15.

The input unit 11 is implemented by using input devices such as a keyboard and a mouse, and inputs various types of instruction information such as a processing start to the control unit 15 in response to an input operation from an operator. The output unit 12 is implemented by a display device such as a liquid crystal display, a printing device such as a printer, or the like. For example, the output unit 12 displays a result of abnormality detection processing that will be described later.

The communication control unit 13 is implemented with a network interface card (NIC) or the like and controls communication between the control unit 15 and an external device via a telecommunication line such as a local area network (LAN) or the Internet. For example, the communication control unit 13 controls communication between the control unit 15 and a management device or the like that manages various types of information.

The storage unit 14 is implemented by a semiconductor memory element such as a random access memory (RAM) or a flash memory, or a storage device such as a hard disk or an optical disc. In the storage unit 14, a processing program for operating the abnormality detection device 10, data to be used during execution of the processing program, and the like are stored in advance, or temporarily stored each time the processing is performed. The storage unit 14 may be configured to communicate with the control unit 15 via the communication control unit 13.

The control unit 15 is implemented by using a central processing unit (CPU), a network processor (NP), a field programmable gate array (FPGA), or the like and executes a processing program stored in the memory. As a result, as illustrated in Fig. 1, the control unit 15 functions as an acquisition unit 15a, a creation unit 15b, an identification unit 15c, and a determination unit 15d, and executes abnormality detection processing.

Each or some of these functional units may be implemented in different sets of hardware. For example, the acquisition unit 15a may be implemented in hardware different from other functional units. The control unit 15 may also include other functional units. For example, the control unit 15 may be incorporated in an anomaly-type abnormality detection system.

The acquisition unit 15a acquires an alert indicating that communication has been detected as abnormal communication that is different in pattern from normal communication. Specifically, the acquisition unit 15a acquires, via the input unit 11 or the communication control unit 13, an alert indicating abnormal communication output from the anomaly-type abnormality detection system.

In addition, the acquisition unit 15a acquires learning data used for learning of the anomaly-type abnormality detection system. For example, the acquisition unit 15a acquires the learning data used for learning of a detection model of the anomaly-type abnormality detection system via the input unit 11, or from a management device that manages the learning data or the like via the communication control unit 13. The acquisition unit 15a may store an alert and learning data acquired in advance in the storage unit 14. Alternatively, the acquisition unit 15a may immediately transfer the acquired alert and learning data to a functional unit described below without storing the acquired alert and learning data in the storage unit 14.

The creation unit 15b creates a group for each of predetermined communication features for alerts indicating that communication has been detected as abnormal communication that is different in pattern from normal communication. Specifically, the creation unit 15b creates a group in which the same communication source IP address, communication destination IP address, and communication destination port number are used as a predetermined communication feature.

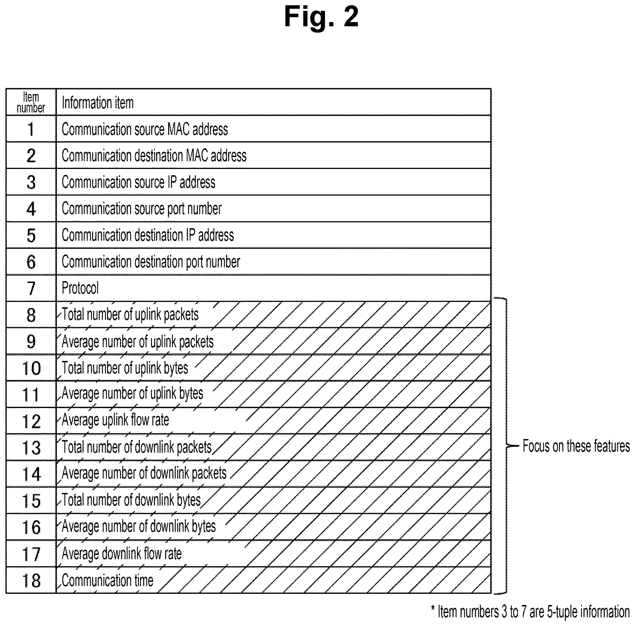

Here, Fig. 2 is a diagram for illustrating processing of the creation unit and the identification unit. Fig. 2 illustrates an example of information items related to each piece of communication, and, for example, item numbers 3 to 7 are 5-tuple information. The creation unit 15b sets, as one group, alerts for communication with the same communication source IP address, communication destination IP address, and communication destination port number, which are included in the 5-tuple among the information items (communication features) illustrated in Fig. 2.

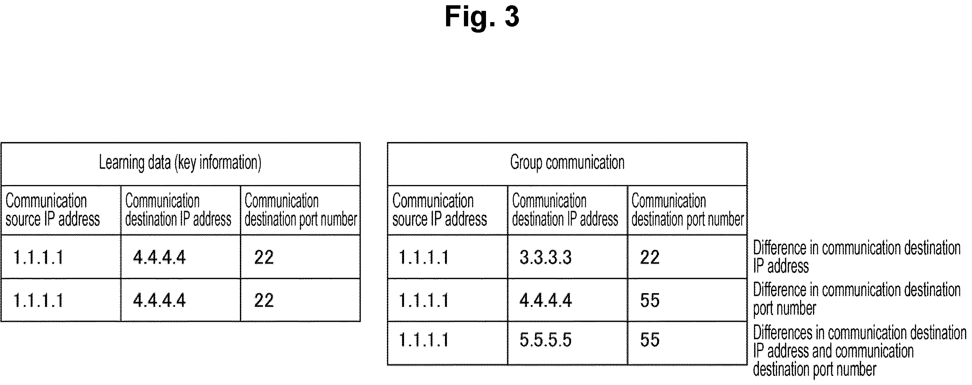

Figs. 3 to 7 are diagrams for illustrating the processing of the identification unit. The identification unit 15c identifies, for each group of alerts that has been created, the cause of notification of the alerts.

Specifically, first, the identification unit 15c determines whether the communication of the group of alerts has been learned in such a way as to allow for output of whether the communication is normal or abnormal, thereby identifying the cause of notification of the alerts. That is, the identification unit 15c determines whether the same combination of a communication source IP address, a communication destination IP address, and a communication destination port number as that of the group exists in the learning data used for learning of the detection model of the anomaly-type abnormality detection system. Note that, in the present embodiment, learned means that learning has been performed using a normal pattern.

For example, as illustrated in Fig. 3, in a case where any of the communication source IP address, the communication destination IP address, and the communication destination port number is different from that of the learning data, it is determined that learning has not been performed. In this way, in a case where learning has not been performed, the identification unit 15c identifies that the cause of the alert notification is occurrence of a new communication with a new communication destination. In this case, the abnormality detection device 10 can recommend an operator to take an action to check the details of the communication of the group.

Next, in a case where the communication of the group of alerts has been learned in such a way as to allow for output of whether the communication is normal or abnormal, the identification unit 15c determines whether the feature of the communication of the group is similar to the learned feature, thereby identifying the cause of notification of the alerts. For example, with a focus on the features of item numbers 8 to 18 illustrated in Fig. 2, the identification unit 15c integrates these features, and performs clustering by a Gaussian Mixture Model (GMM). Then, it is determined whether a clustered class exists in the learning data.

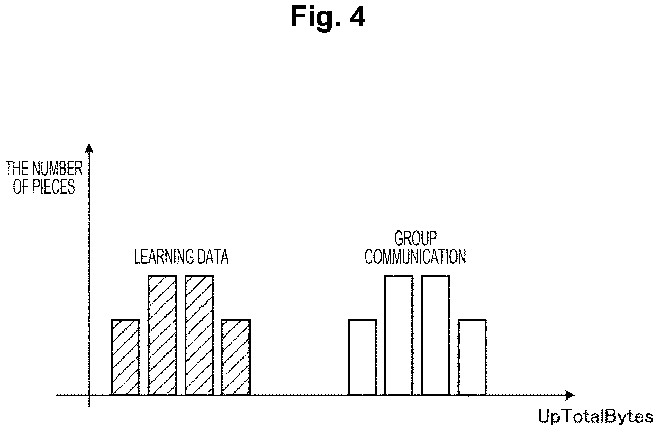

For example, Fig. 4 illustrates a distribution of the total number of uplink bytes as the feature of each piece of communication. Then, as illustrated in Fig. 4, in a case where the distribution of the feature of the learning data is different from the distribution of the feature of the group of alerts, it is determined that the two features are not similar to each other. As described above, in a case where the feature of the communication of the group is not similar to the feature of the learned learning data, the identification unit 15c identifies that the cause of the alert notification is that the communication destination remains unchanged but a communication aspect has changed. In this case, the abnormality detection device 10 recommends the operator to take an action to check the details of the communication of the group.

Next, regarding the communication of the group of alerts, in a case where the feature of the communication of the group is similar to the learned feature, the identification unit 15c identifies the cause of notification of the alerts by determining the degree of deviation of a value for detection as abnormal communication from a predetermined threshold.

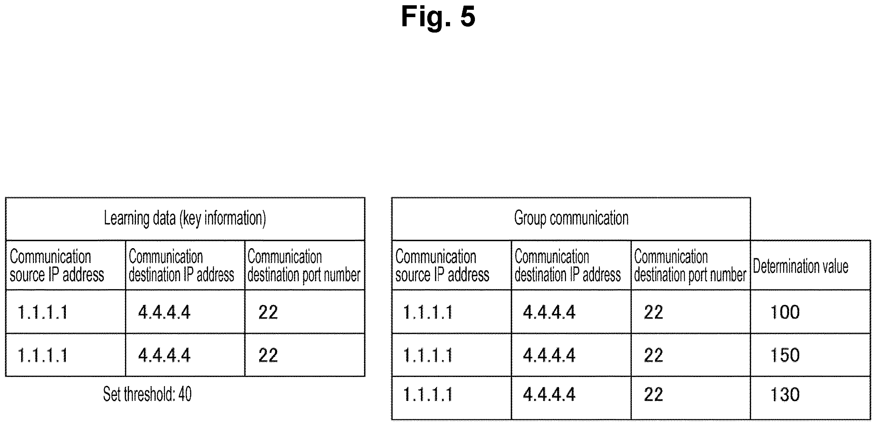

For example, Fig. 5 illustrates a case where the threshold of determination values of abnormality determination is set to 40, and determination values of abnormality determination of the communication of the group are 100, 150, and 130. In this case, the identification unit 15c determines that, for example, the degree of deviation is 1.2 times or more and the deviation is large. In a case where the deviation of the determination values of abnormality determination of the communication of this group of alerts from the threshold is as large as a certain multiple or more as described above, it is estimated that an alert notification has been given due to insufficient maturation of a model of abnormality detection. In this case, since the learning data is insufficient, the abnormality detection device 10 recommends the operator to add the communication of the group as learning data of the model of abnormality detection, for example.

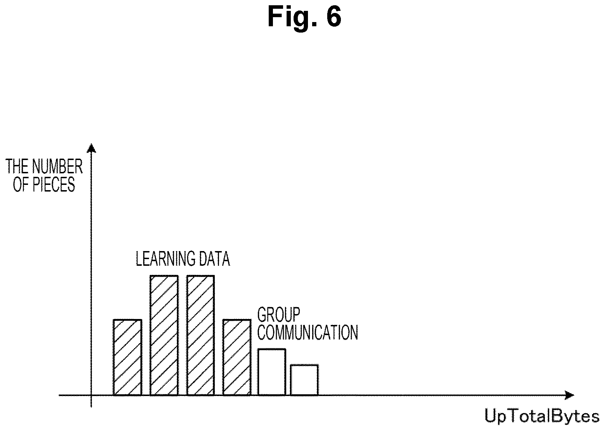

On the other hand, Fig. 6 illustrates a case where the feature (distribution of the total number of uplink bytes) of the learning data indicated by hatching is similar to the feature of the communication of the group of alerts, and the deviation of the determination values of abnormality determination of the two from the threshold is as small as less than a certain multiple. In a case where the deviation of the determination values of abnormality determination of the communication of this group of alerts from the threshold is as small as less than a certain multiple as described above, it is estimated that an alert notification has been given because an abnormality close to normal has occurred. Also in this case, the abnormality detection device 10 recommends the operator to add, for example, the communication of this group of alerts as learning data of the model of abnormality detection due to insufficient learning.

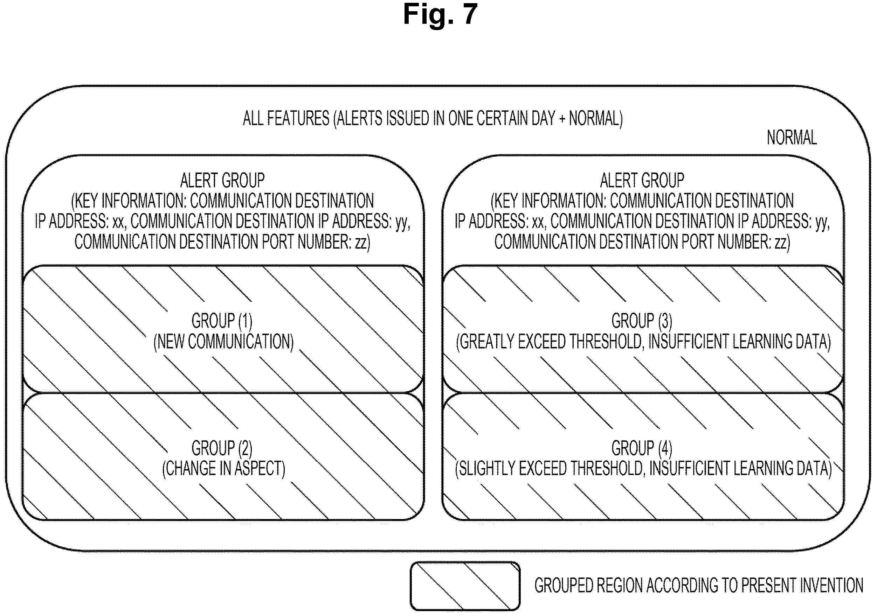

In this manner, the identification unit 15c identifies the cause of the alert notification for an alert group of each group as illustrated in Fig. 7. In Fig. 7, Group (1) is an alert group in which it is identified that the cause of the alert notification is occurrence of communication with a new communication destination. Group (2) is an alert group in which it is identified that the cause of the alert notification is that the communication destination remains unchanged but the communication aspect has changed. Group (3) is an alert group in which it is identified that the cause of the alert notification is insufficient maturation of the model because the deviation of the determination values of abnormality determination from the predetermined threshold is large. Group (4) is an alert group in which it is identified that the cause of the alert notification is insufficient learning because the deviation of the determination values of abnormality determination from the predetermined threshold is small.

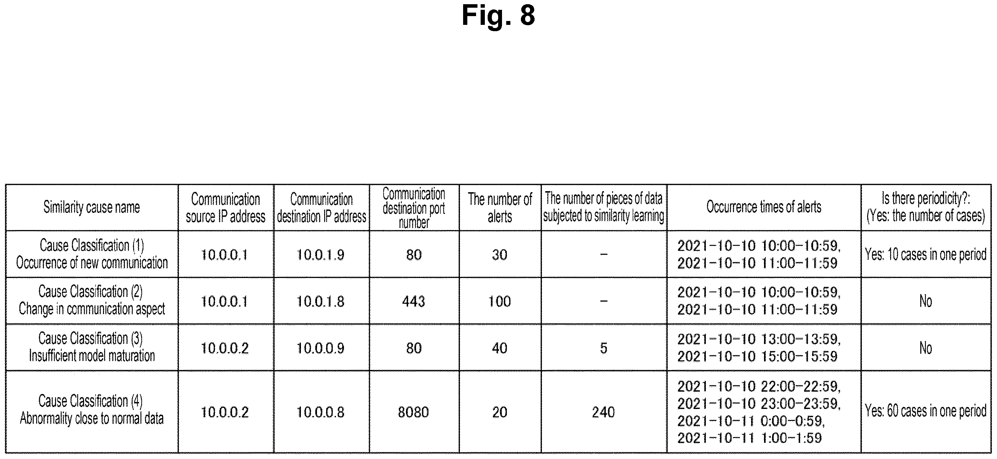

Then, the identification unit 15c outputs, to the output unit 12, the cause of the alert notification identified for each group of alerts as a result of abnormality detection processing. Here, Fig. 8 is a diagram illustrating an example of abnormality detection processing results displayed on a screen. As illustrated in Fig. 8, the identification unit 15c outputs a similarity cause name indicating the identified cause of the alert notification for each group identified by the communication source IP address, the communication destination IP address, and the communication destination port number. In addition, for Group (3) and Group (4) described above, the number of pieces of learned learning data is output.

In the example illustrated in Fig. 8, Cause Classification (1) "occurrence of new communication" corresponds to the alert group of Group (1) described above. Cause Classification (2) "change in communication aspect" corresponds to the alert group of Group (2) described above. Cause Classification (3) "insufficient model maturation" corresponds to the alert group of Group (3) described above. Cause Classification (4) "abnormality close to normal data" corresponds to the alert group of Group (4) described above.

The description returns to Fig. 1. The determination unit 15d determines, for each group of alerts, whether there is a periodicity in occurrence times of the alerts. For example, the determination unit 15d aggregates the occurrence times of the alerts every hour and identifies the number of alert occurrences. Then, the determination unit 15d determines whether the alert group of the group has a periodicity, and, in a case where there is a periodicity, identifies the number of alerts in one period.

As illustrated in Fig. 8, the determination unit 15d adds the determination on whether there is a periodicity to the abnormality detection processing result, and outputs the result. In the example illustrated in Fig. 8, the number of alerts, occurrence times of the alerts, and whether there is a periodicity are added for each group.

As described above, the cause of the alert notification for each alert group is presented, and thus the risk of missing a true alert to be checked is reduced even in a case where a large number of alerts occur. For example, for the alert groups of Cause Classification (1) and Cause Classification (2), it is possible to allow the operator to perceive that it is necessary to check the details of the communication of the group. In addition, it is estimated that the learning data is insufficient for the alert groups of Cause Classification (3) and Cause Classification (4), and it is possible to allow the operator to perceive that investigation is necessary.

### [Abnormality Detection Processing]

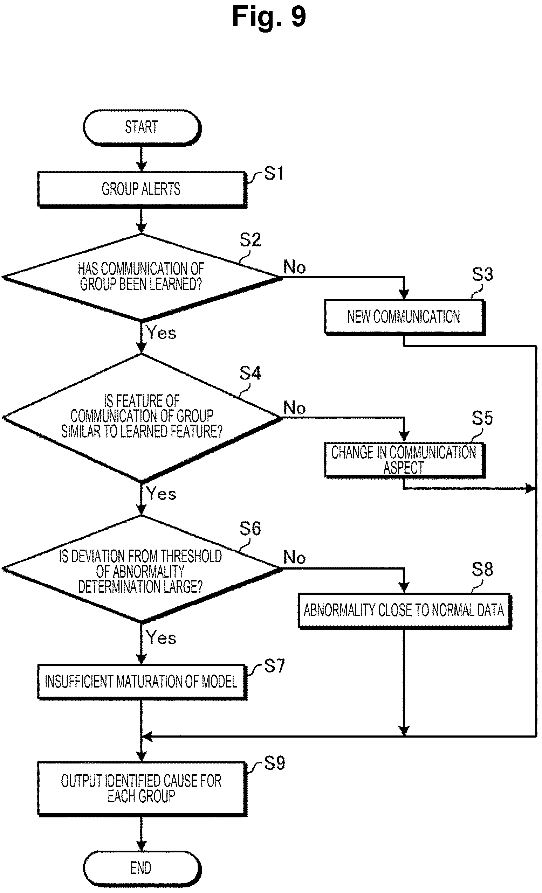

Next, abnormality detection processing by the abnormality detection device 10 according to the present embodiment will be described with reference to Fig. 9. Fig. 9 is a flowchart illustrating an abnormality detection processing procedure. The flowchart of Fig. 9 starts, for example, at a timing at which a user performs an input operation of giving an instruction for start.

First, the creation unit 15b creates a group for each of predetermined communication features for alerts indicating that communication has been detected as abnormal communication that is different in pattern from normal communication. For example, a group in which the same communication source IP address, communication destination IP address, and communication destination port number are used as a predetermined communication feature is created (step S1).

Next, the identification unit 15c identifies, for each group of alerts that has been created, the cause of notification of the alerts. Specifically, the identification unit 15c first determines whether the communication of the group of alerts has been learned in such a way as to allow for output of whether the communication is normal or abnormal (step S2). That is, it is determined whether a combination of a communication source IP address, a communication destination IP address, and a communication destination port number that is the same as the group exists in learning data. In a case where the communication of the group has not been learned (No in Step S2), the identification unit 15c identifies that the cause of the alert notification is occurrence of communication with a new communication destination (step S3), and advances the processing to step S9.

On the other hand, in a case where the communication of the group of alerts has been learned in such a way as to allow for output of whether the communication is normal or abnormal (Yes in Step S2), the identification unit 15c determines whether the feature of the communication of this group of alerts is similar to the learned feature (step S4). In a case where the feature of the communication of this group of alerts is not similar to the feature of the learned learning data (No in Step S4), the identification unit 15c identifies that the cause of the alert notification is a change in communication aspect (step S5), and advances the processing to step S9.

On the other hand, regarding the communication of the group of alerts, in a case where the feature of the communication of the alerts is similar to the feature that has been learned in such a way as to allow for output of whether the communication is normal or abnormal (Yes in Step S4), the identification unit 15c determines the degree of deviation of a determination value for determining that the communication is abnormal from a predetermined threshold (step S6). In a case where the degree of deviation of the determination value of the communication of this group of alerts from the threshold is larger than a predetermined value (Yes in Step S6), the identification unit 15c identifies that the cause of the alert notification is insufficient maturation of the model of abnormality detection (step S7), and advances the processing to step S9.

On the other hand, in a case where the degree of deviation of the determination value of the communication of this group of alerts from the threshold is smaller than the predetermined value (No in Step S6), the identification unit 15c identifies that the cause of the alert notification is occurrence of an abnormality close to normal (step S8), and advances the processing to step S9.

In the processing of step S9, the identification unit 15c outputs, to the output unit 12, the cause of the alert notification identified for each group of alerts as a result of the abnormality detection processing.

In addition, the determination unit 15d determines, for each group of alerts, whether there is a periodicity in occurrence times of the alerts, adds a result of the determination on whether there is a periodicity to the result of the abnormality detection processing, and outputs the result. Thus, the series of abnormality detection processing ends.

### [Effects]

As described above, in the abnormality detection device 10 of the present embodiment, the creation unit 15b creates a group for each of predetermined communication features for alerts indicating that communication has been detected as abnormal communication that is different in pattern from normal communication. In addition, the identification unit 15c identifies, for each group of alerts that has been created, the cause of notification of the alerts.

Specifically, the creation unit 15b creates a group in which the same communication source IP address, communication destination IP address, and communication destination port number are used as a predetermined communication feature.

As a result, it is possible to determine whether it is necessary to take an action to check the details of the communication for each group of alerts. In this manner, it is possible to reduce the number of alerts for which it is necessary to take an action to check the details of the communication, thereby reducing the time required for the checking. It is therefore possible to avoid a risk of overlooking a true alert in a large number of alerts. In this manner, it is possible to avoid a risk of overlooking a true alert in an anomaly-type abnormality detection system.

In addition, the identification unit 15c determines whether the communication of the group of alerts has been learned in such a way as to allow for output of whether the communication is normal or abnormal, thereby identifying the cause of notification of the alerts. For example, in a case where learning has not been performed, it can be identified that the cause is occurrence of communication with a new communication destination. It is therefore possible to recommend the operator to take an action to check the details of the communication.

Furthermore, in a case where the communication of the group of alerts has been learned in such a way as to allow for output of whether the communication is normal or abnormal, the identification unit 15c determines whether the feature of the communication of this group of alerts is similar to the learned feature, thereby identifying the cause of notification of the alerts. For example, in a case where the feature of the communication of this group of alerts is not similar to the feature of the learned learning data, it can be estimated that the cause is that the communication destination remains unchanged but the communication aspect has changed. It is therefore possible to recommend the operator to take an action to check the details of the communication.

In addition, regarding the communication of the group of alerts, in a case where the feature of the communication of this group of alerts is similar to the feature that has been learned in such a way as to allow for output of whether the communication is normal or abnormal, the identification unit 15c identifies the cause of the alert notification by determining the degree of deviation of the value for determining the communication as abnormal communication from the predetermined threshold. For example, in a case where the deviation of the determination value of the communication of this group of alerts from the predetermined threshold is large, it is estimated that the cause is insufficient maturation of the model of abnormality detection, and in a case where the deviation of the determination value of the communication of this group of alerts from the predetermined threshold is small, it is estimated that the cause is an abnormality close to normal. In either case, it is possible to recommend the operator to add the communication of this group of alerts as learning data of the model of abnormality detection.

In addition, the determination unit 15d determines, for each group of alerts, whether there is a periodicity in occurrence times of the alerts. As a result, it is possible to more reliably avoid overlooking of a true alert by checking the alerts with a focus on the periodicity.

### [Program]

It is also possible to create a program in which the processing executed by the abnormality detection device 10 according to the above embodiment is described in a computer executable language. As an embodiment, the abnormality detection device 10 can be implemented by installing an abnormality detection program for executing the above-described abnormality detection processing as package software or online software on a desired computer. For example, by causing an information processing device to execute the abnormality detection program described above, the information processing device can be caused to function as the abnormality detection device 10. The information processing device described here includes a desktop or laptop personal computer. In addition, the category of the information processing device includes a mobile communication terminal such as a smartphone, a mobile phone, or a personal handyphone system (PHS), a slate terminal such as a personal digital assistant (PDA), and the like. The function of the abnormality detection device 10 may be implemented in a cloud server.

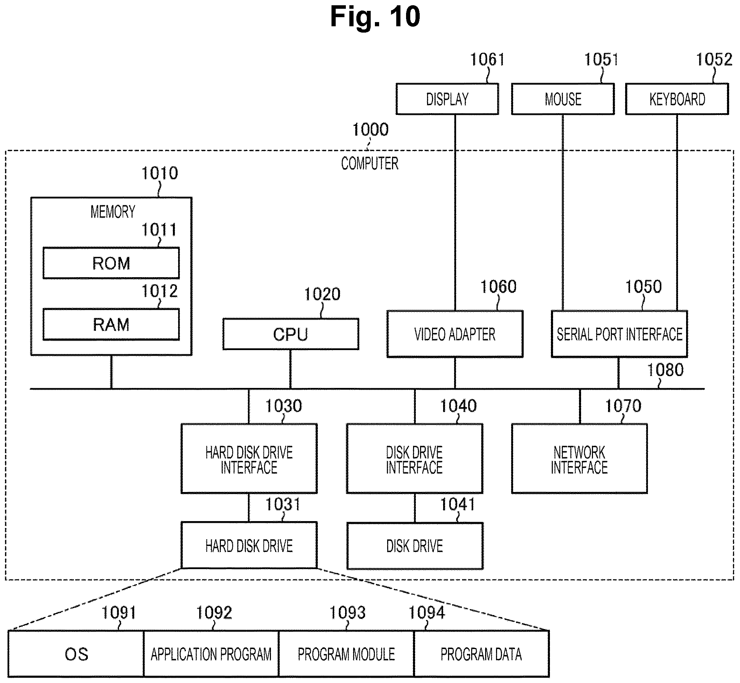

Fig. 10 is a diagram illustrating an example of a computer that executes the abnormality detection program. A computer 1000 includes, for example, a memory 1010, a CPU 1020, a hard disk drive interface 1030, a disk drive interface 1040, a serial port interface 1050, a video adapter 1060, and a network interface 1070. These components are connected by a bus 1080.

The memory 1010 includes a read only memory (ROM) 1011 and a RAM 1012. The ROM 1011 stores, for example, a boot program such as a basic input output system (BIOS). The hard disk drive interface 1030 is connected to a hard disk drive 1031. The disk drive interface 1040 is connected to a disk drive 1041. For example, a removable storage medium such as a magnetic disk or an optical disc is inserted into the disk drive 1041. The serial port interface 1050 is connected to, for example, a mouse 1051 and a keyboard 1052. The video adapter 1060 is connected to, for example, a display 1061.

Here, the hard disk drive 1031 stores, for example, an OS 1091, an application program 1092, a program module 1093, and program data 1094. The information described in the above embodiment is stored in the hard disk drive 1031 or the memory 1010, for example.

The abnormality detection program is stored in the hard disk drive 1031 as the program module 1093 in which a command to be executed by the computer 1000 is described, for example. Specifically, the program module 1093 in which each piece of processing to be executed by the abnormality detection device 10 described in the above embodiment is described is stored in the hard disk drive 1031.

Data used for information processing performed by the abnormality detection program is stored, for example, in the hard disk drive 1031 as the program data 1094. The CPU 1020 reads, into the RAM 1012, the program module 1093 and the program data 1094 stored in the hard disk drive 1031 as necessary and executes each procedure described above.

Note that the program module 1093 and the program data 1094 related to the abnormality detection program are not limited to being stored in the hard disk drive 1031, and may be stored in, for example, a removable storage medium and read by the CPU 1020 via the disk drive 1041 or the like. Alternatively, the program module 1093 and the program data 1094 related to the abnormality detection program may be stored in another computer connected via a network such as a LAN or a wide area network (WAN) and read by the CPU 1020 via the network interface 1070.

Although the embodiment to which the invention made by the present inventor is applied has been described above, the present invention is not limited by the description and drawings constituting a part of the disclosure of the present invention according to the present embodiment. That is, other embodiments, examples, operational technologies, and the like made by those skilled in the art or the like on the basis of the present embodiment are all included in the scope of the present invention.

### Reference Signs List

- 10: Abnormality detection device
- 11: Input unit
- 12: Output unit
- 13: Communication control unit
- 14: Storage unit
- 15: Control unit
- 15a: Acquisition unit
- 15b: Creation unit
- 15c: Identification unit
- 15d: Determination unit

## Claims

1. An abnormality detection device comprising:
a creation unit that creates a group for each of predetermined communication features for alerts indicating that communication has been detected as abnormal communication that is different in pattern from normal communication; and
an identification unit that identifies, for each of the created groups of alerts, a cause of notification of the alerts.

2. The abnormality detection device according to claim 1, wherein the creation unit creates the group in which the same communication source IP address, communication destination IP address, and communication destination port number are used as a predetermined communication feature.

3. The abnormality detection device according to claim **1,** wherein the identification unit identifies the cause by determining whether communication of the group has been learned in such a way as to allow for output of whether the communication is normal or abnormal.

4. The abnormality detection device according to claim 3, wherein in a case where the communication of the group has been learned, the identification unit identifies the cause by determining whether a feature of the communication of the group is similar to a learned feature.

5. The abnormality detection device according to claim 4, wherein for the communication of the group, in a case where the feature of the communication of the group is similar to the learned feature, the identification unit identifies the cause by determining a degree of deviation of a value for detection as abnormal communication from a predetermined threshold.

6. The abnormality detection device according to claim 1, further comprising a determination unit that determines whether there is a periodicity in occurrence times of the alerts for each of the groups.

7. An abnormality detection method executed by an abnormality detection device, the abnormality detection method comprising:
a creation process of creating a group for each of predetermined communication features for alerts indicating that communication has been detected as abnormal communication that is different in pattern from normal communication; and
an identification process of identifying, for each of the created groups of alerts, a cause of notification of the alerts.

8. An abnormality detection program for causing a computer to execute:
a creation step of creating a group for each of predetermined communication features for alerts indicating that communication has been detected as abnormal communication that is different in pattern from normal communication; and
an identification step of identifying, for each of the created groups of alerts, a cause of notification of the alerts.
